# EUROPÄISCHE PATENTSCHRIFT

(11) **EP 1 025 326 B1**
(45) Veröffentlichungstag und Bekanntmachung des Hinweises auf die Patenterteilung: **26.02.2003**
(21) Anmeldenummer: 98958819.9
(22) Anmeldetag: 23.10.1998
(51) Int. Cl.: E05B 49/00, B60R 1/12

(54) **EINRICHTUNG ZUM VERRIEGELN UND ENTRIEGELN EINER TÜR**
DEVICE FOR LOCKING AND UNLOCKING A DOOR
DISPOSITIF DE VERROUILLAGE ET DE DEVERROUILLAGE DE PORTE

(30) Priorität: 23.10.1997 DE 19746749
(43) Veröffentlichungstag der Anmeldung: 09.08.2000
(73) Patentinhaber: ROBERT BOSCH GMBH, 70442 Stuttgart (DE)
(72) Erfinder: SCHMITZ, Stephan, D-70197 Stuttgart (DE); PAVATICH, Gianfranco, Keilor Downs, VIC 3038 (AU); BABER, Adrian, Croydon Hills, VIC 3136 (AU)
(86) Internationale Anmeldenummer: DE9803105
(87) Internationale Veröffentlichungsnummer: WO99022101

(56) Entgegenhaltungen:
- EP-A- 0 158 354
- DE-A- 3 820 248
- DE-A- 3 844 002

## Beschreibung

### Stand der Technik

Die Erfindung bezieht sich auf eine Einrichtung zum Verriegeln und Entriegeln einer Tür eines Objektes, insbesondere eines Kraftfahrzeuges, mit einer an dem Objekt angeordneten Sendeeinheit zum Erzeugen eines Feldes und einer einem Benutzer zugeordneten Antworteinheit zum Abgeben von Signalen und mit einer Schalteinrichtung.

Eine derartige Einrichtung zum schlüssellosen Verriegeln und Entriegeln einer Tür ist in "Keyless Entry System With Radio Card Transponder", Motoki Hirano et al, IEEE Transactions on Industrial Electronics, VOL. 35, 1988, Seiten 208 bis 216 angegeben. Eine verriegelte Tür eines Kraftfahrzeuges wird entriegelt, sobald ein Benutzer, der eine Antworteinheit (Transponder) trägt, in das Abfragefeld einer im Bereich der Tür befindlichen Sendeeinheit eintritt, die Abfrage auslöst und die Sendeeinheit mittels entsprechender Auswerteeinrichtung den Code des Transponders als richtig erkannt hat. Bei einer derartigen Einrichtung besteht ein Problem darin, dass die Fahrzeugtür von außen geöffnet werden kann, wenn sich der Fahrer mit dem Transponder im Innenraum des Fahrzeuges befindet, obwohl er, z.B. auf einem Parkplatz in seinem Fahrzeug wartend, die Tür verriegelt halten möchte.

Eine weitere Einrichtung zum Verriegeln und Entriegeln der Tür eines Kraftfahrzeuges ist in der DE 38 20 248 A als bekannt ausgewiesen. Auch hierbei wird von einer an dem Fahrzeug angeordneten Sendeeinheit ein Feld erzeugt, um eine einem Benutzer zugeordnete kartenförmige Antworteinheit abzufragen. Ein manuell betätigbarer Trigger- bzw. Auslöseschalter ist an einer Fahrzeugkarosserie befestigt und von außen zugänglich.

Ist beispielsweise die Sendeeinheit in einem Außenspiegel untergebracht, wobei die Sendekeule den Innenraum normalerweise nicht erreicht, so kann ein Angreifer den Außenspiegel einschwenken, um die Sendekeule auf den Transponder zu richten und die Tür zu entriegeln.

Der Erfindung liegt die Aufgabe zugrunde, eine Einrichtung der eingangs genannten Art bereitzustellen, mit der eine unerwünschte Entriegelung der Tür sicher unterbunden werden kann.

Diese Aufgabe wird mit den Merkmalen des Anspruches 1 und alternativ des Anspruches 2 gelöst.

Dadurch, dass das Feld der Sendekeule oder der von der Antworteinheit abgegebenen Signale in seiner Reichweite verringert ist oder gestört ist oder alternativ die Signale der Antworteinheit gestört sind, wird eine Abfrage des im Innenraum des Kraftfahrzeuges befindlichen Transponders unterbunden. Die Tür bleibt verriegelt, solange der Benutzer dies wünscht.

Ein einfacher Aufbau der Einrichtung besteht darin, dass die Sendeeinheit in einem Außenspiegel des Kraftfahrzeuges angeordnet ist und dass die Schalteinrichtung Fühlerelemente aufweist, die bei Verstellung des Außenspiegels derart, dass die Sendekeile in den Innenraum gerichtet ist, ansprechen. Mittels der Schalteinrichtung, die beispielsweise auch elektronisch aufgebaut sein kann, wird die Reichweite des Feldes z.B. auf wenige cm reduziert, so dass der Transponder des Insassen nicht erreicht wird, oder eine Störquelle wird eingeschaltet, so dass der Transponder ebenfalls nicht abfragbar ist.

Eine vorteilhafte Ausführungsform besteht weiterhin darin, dass die Fühlerelemente im Gelenk des Außenspiegels angeordnete Kontaktelemente sind.

Ist die Sendeeinheit beispielsweise in der Tür eingebaut, so kann die Umschaltung des Feldes auf die kurze Reichweite oder die Einschaltung der Störquelle dadurch erreicht werden, dass die Schalteinrichtung eine im Innenraum befindliche, vom Benutzer betätigbare Schaltvorrichtung aufweist. Neben der Anordnung in dem Spiegel sind geeignete Stellen zum Anordnen der Sendeeinheit in der Tür oder deren Umrandung.

Die Abfrage der Antworteinheit im Innenraum läßt sich mit guter Wirksamkeit auch dadurch unterbinden, dass zum Stören des Feldes im Innenraum in dem Innenraum eine Störquelle angeordnet ist, deren Abstrahlfrequenz derjenigen der Sendeeinheit entspricht.

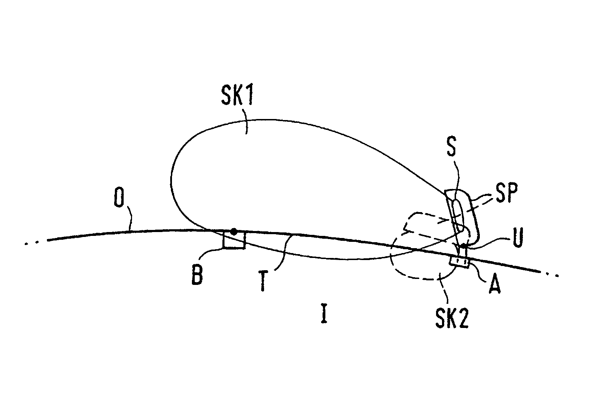

Die Erfindung wird nachfolgend anhand eines Ausführungsbeispiels unter Bezugnahme auf die Zeichnung näher erläutert.

Die Fig. zeigt eine schematische Darstellung einer Einrichtung zum Verriegeln und Entriegeln einer Tür T eines Kraftfahrzeuges O in Draufsicht. Im Bereich der zwischen einer A- und B-Säule des Kraftfahrzeuges O befindlichen Tür T erstreckt sich im wesentlichen auf der Außenseite ein Feld in Form einer Sendekeule SK1 einer Sendeeinheit S, die in einem Außenspiegel SP untergebracht ist. Der Außenspiegel SP ist mittels eines entsprechenden Gelenkes abklappbar, so dass auch die Sendekeule entsprechend zum Innenraum I des Fahrzeuges O geschwenkt wird. In dem Gelenkbereich des Spiegels befindet sich eine Schalteinrichtung bzw. Umschalteinrichtung U, mit der die Sendekeule SK1 beim Einklappen des Spiegels SP auf eine Sendekeule SK2 von nur wenigen cm reduziert wird, wie gestrichelt dargestellt ist.

Tritt ein Benutzer in die Sendekeule SK1 mit seiner Antworteinheit in Form des Transponders ein und wird die Sendeeinheit S iniziiert, beispielsweise durch Betätigen des Türgriffes, so erfolgt die Abfrage des Transponders mittels einer Auswerteeinheit der Sendeeinheit S, und wenn der zugehörige Transponder erkannt wird, wird die Tür T entriegelt. Befindet sich der Benutzer im Fahrzeug, so kann er die Tür verriegeln. In dem gezeigten Ausführungsbeispiel wird sein Transponder von der Sendekeule SK1 nicht erreicht, so dass bei Betätigung des Türgriffes dessen Code auch nicht entschlüsselt werden kann und die Tür verriegelt bleibt, so dass beispielsweise ein Angreifer von außen nicht in das Fahrzeug O eindringen kann. Klappt der Angreifer hingegen den Außenspiegel SP in die gestrichelt dargestellte Stellung, so wird die Reichweite des Feldes der Sendeeinheit S verkürzt, so dass die Sendekeule SK2 entsteht, die ebenfalls den Transponder des Insassen nicht erreicht, so dass die Tür T auch in dieser Stellung des Spiegels SP verriegelt bleibt.

Entsprechend könnte das Feld bei einer in der Tür T oder einer Türumrandung eingebauten Sendekeule mittels einer von dem Benutzer zu betätigenden Schalteinrichtung auf eine kurze Reichweite umgeschaltet werden, so dass sein Transponder ebenfalls nicht erreicht und die Tür geschlossen gehalten wird, selbst wenn eine Abfrage durch Betätigung des Türgriffes ausgelöst wird. Eine erfolgreiche Abfrage des Transponders kann alternativ auch dadurch unterbunden werden, dass dem Feld im Innenraum I mittels einer dort befindlichen Störquelle ein Störfeld überlagert wird. Zum Einschalten des Störfeldes kann im Innenraum eine von dem Benutzer betätigbare Schaltvorrichtung angeordnet sein.

Alternativ kann auch das Feld des Transponders reduziert oder gestört werden, so dass die Kommunikation mit der Sendeeinheit S unterbunden ist und die Tür T verriegelt bleibt.

Die beschriebenen Maßnahmen ergeben eine einfach zu bedienende Einrichtung zum Verriegeln und Entriegeln einer Tür, die hohen Sicherheitsanforderungen gerecht wird.

## Patentansprüche

1. Einrichtung zum Verriegeln und Entriegeln einer Tür eines Objektes (O), insbesondere eines Kraftfahrzeuges, mit einer an dem Objekt (O) angeordneten Sendeeinheit (S) zum Erzeugen eines Feldes, mit einem einem Benutzer zugeordneten Antworteinheit zum Abgeben von Signalen, und mit einer Schalteinrichtung (U),
**dadurch gekennzeichnet,**
**dass** Mittel vorgesehen sind, durch die das erzeugte Feld der von der Sendeeinheit (S) gebildeten Sendekeule (SK1) bei der Ausrichtung der Sendekeule (SK1) auf den Innenraum (I) des Objektes (O) und auf Betätigen der eigens zu diesem Zweck vorgesehenen Schalteinrichtung (U) in seiner Reichweite so weit verringert oder gestört wird, dass ein Abfragedialog einer im Aufenthaltsbereich des Innenraumes (I) befindlichen Antworteinheit unterbunden ist.

2. Einrichtung zum Verriegeln und Entriegeln einer Tür eines Objektes (O), insbesondere eines Kraftfahrzeuges, mit einer an dem Objekt (O) angeordneten Sendeeinheit (S) zum Erzeugen eines Feldes, mit einer einem Benutzer zugeordneten Antworteinheit zum Abgeben von Signalen und mit einer Schalteinrichtung (U),
**dadurch gekennzeichnet,**
**dass** Mittel vorgesehen sind, durch die ein erzeugtes Feld der von der Antworteinheit abgegebenen Signale bei Ausrichtung der von der Sendeeinheit (S) gebildeten Sendekeule (SK1) auf den Innenraum (I) des Objektes (O) und auf Betätigen der eigens zu diesem Zweck vorgesehenen Schalteinrichtung (U) so stark gestört wird, dass ein Abfragedialog einer im Aufenthaltsbereich des Innenraumes (I) befindlichen Antworteinheit unterbunden ist.

3. Einrichtung nach Anspruch 1 oder 2,
**dadurch gekennzeichnet,**
**dass** die Sendeeinheit (S) in einem Außenspiegel (SP) des Kraftfahrzeuges (O) angeordnet ist und
**dass** die Schalteinrichtung (U) Fühlerelemente aufweist, die bei Verstellung des Außenspiegels (SP) derart, dass die Sendekeule (SK1) in den Innenraum (I) gerichtet ist, ansprechen.

4. Einrichtung nach Anspruch 3,
**dadurch gekennzeichnet,**
**dass** die Fühlerelemente im Gelenk des Außenspiegels (SP) angeordnete Kontaktelemente sind.

5. Einrichtung nach Anspruch 1 bis 3,
**dadurch gekennzeichnet,**
**dass** die Schalteinrichtung (U) eine im Innenraum (I) befindliche, vom Benutzer betätigbare Schaltvorrichtung aufweist.

6. Einrichtung nach Anspruch 1, 2 oder 5,
**dadurch gekennzeichnet,**
**dass** die Sendeeinheit (S) in der Tür (T) oder deren Umrandung (A, B) angeordnet ist.

7. Einrichtung nach einem der vorhergehenden Ansprüche,
**dadurch gekennzeichnet,**
**dass** zum Stören des Feldes im Innenraum (I) eine Störquelle angeordnet ist, deren Abstrahlfrequenz derjenigen der Sendeeinheit (S) entspricht.

## Claims

1. Device for locking and unlocking a door of an object (O), in particular of a motor vehicle, having a transmission unit (S), arranged on the object (O), for generating a field, having a response unit, assigned to a user, for outputting signals, and having a switching device (U), **characterized in that** means are provided which, when aligning the transmission lobe (SK1) with the interior (I) of the object (O) and in response to the activation of the switching device (U) which is especially provided for this purpose, reduce or disrupt the range of the generated field of the transmission lobe (SK1), formed by the transmission unit (S), to such an extent that an interrogation dialogue of a response unit which is located in the accommodation region of the interior (I) is prevented.

2. Device for locking and unlocking a door of an object (O), in particular of a motor vehicle, having a transmission unit (S), arranged on the object (O), for generating a field, having a response unit, assigned to a user, for outputting signals, and having a switching device (U), **characterized in that** means are provided which, when aligning the transmission lobe (SK1) formed by the transmission unit (S) with the interior (I) of the object (O) and in response to the switching device (U) which is especially provided for this purpose, disrupts a generated field of signals which are output by the response unit to such an extent that a response dialogue of a response unit located in the accommodation region of the interior (I) is prevented.

3. Device according to Claim 1 or 2, **characterized in that** the transmission unit (S) is arranged in an exterior mirror (SP) of the motor vehicle (O), and **in that** the switching device (U) has sensor elements which during the adjustment of the exterior mirror (SP) respond in such a way that the transmission lobe (SK1) is directed into the interior (I).

4. Device according to Claim 3, **characterized in that** the sensor elements are contact elements arranged in the joint of the exterior mirror (SP).

5. Device according to Claim 1 to 3, **characterized in that** the switching device (U) has a switching device which is located in the interior (I) and can be activated by the user.

6. Device according to Claim 1, 2 or 5, **characterized in that** the transmission unit (S) is arranged in the door (T) or its periphery (A, B).

7. Device according to one of the preceding claims, **characterized in that**, in order to disrupt the field in the interior (I), an interference source is arranged whose irradiation frequency corresponds to that of the transmission unit (S).

## Revendications

1. Installation de verrouillage et de déverrouillage d'une porte d'un objet (O), en particulier d'un véhicule automobile, avec une unité d'émission (S), placée sur l'objet (O), destinée à produire un champ, avec une unité de réponse associée à un utilisateur et destinée à délivrer des signaux et avec une installation de commutation (U),
**caractérisée en ce qu'**
on prévoit des moyens grâce auxquels le champ produit du lobe de rayonnement (SK1) formé par l'unité d'émission (S), lorsqu'on oriente le lobe de rayonnement (SK1) vers l'espace intérieur (I) de l'objet (O) et qu'on actionne l'installation de commutation (U) prévue spécialement à cet effet, est réduit ou brouillé dans son rayon d'action dans une mesure telle qu'on entrave un dialogue d'interrogation d'une unité de réponse placée dans la zone des occupants de l'espace intérieur (I).

2. Installation de verrouillage et de déverrouillage d'une porte d'un objet (O), en particulier d'un véhicule automobile, avec une unité d'émission (S), placée sur l'objet (O), destinée à produire un champ, avec une unité de réponse associée à un utilisateur et destinée à délivrer des signaux et avec une installation de commutation (U),
**caractérisée en ce qu'**
on prévoit des moyens grâce auxquels un champ produit des signaux formés par l'unité de réponse, lorsqu'on oriente le lobe de rayonnement (SK1) formé par l'unité d'émission (S) vers l'espace intérieur (I) de l'objet (O) et qu'on actionne l'installation de commutation (U) prévue spécialement à cet effet, est brouillé à un tel point qu'on empêche un dialogue d'interrogation d'une unité de réponse placée dans la zone des occupants de l'espace intérieur (I).

3. Installation selon la revendication 1 ou 2,
**caractérisée en ce que**
l'unité d'émission (S) est placée dans un rétroviseur (SP) du véhicule automobile (O), et l'installation de commutation (U) présente des éléments de détection qui réagissent lorsque le rétroviseur extérieur (SP) est déplacé de telle sorte que le lobe de rayonnement (SK1) est orienté vers l'espace intérieur (I).

4. Installation selon la revendication 3,
**caractérisée en ce que**
les éléments de détection sont des éléments de contact placés dans l'articulation du rétroviseur extérieur (SP).

5. Installation selon la revendication 1 à 3,
**caractérisée en ce que**
l'installation de commutation (U) présente dans l'espace intérieur (I) un dispositif de commutation que l'utilisateur peut actionner.

6. Installation selon la revendication 1, 2 ou 5,
**caractérisée en ce que**
l'unité d'émission (S) est disposée dans la portière (T) ou dans son bord (A, B).

7. Installation selon l'une des revendications précédentes,
**caractérisée en ce que**
pour brouiller le champ, est disposée dans l'espace intérieur (I) une source de parasite dont la fréquence de rayonnement correspond à celle de l'unité d'émission (S).
